Europäisches Patentamt

European Patent Office

Office européen des brevets

(19)

(11) Veröffentlichungsnummer: **0 259 592**
**B1**

(12) **EUROPÄISCHE PATENTSCHRIFT**

(45) Veröffentlichungstag der Patentschrift:
14.11.90

(21) Anmeldenummer: 87110957.5

(22) Anmeldetag: 29.07.87

(51) Int. Cl.⁵: **C09C 1/64,** C09D 5/38,
C09D 5/02

(54) Wasserverdünnbare Beschichtungszusammensetzungen.

(30) Priorität: 27.08.86 DE 3629159
24.10.86 DE 3636183

(43) Veröffentlichungstag der Anmeldung:
16.03.88 Patentblatt 88/11

(45) Bekanntmachung des Hinweises auf die Patenterteilung:
14.11.90 Patentblatt 90/46

(84) Benannte Vertragsstaaten:
AT BE CH DE ES FR GB IT LI NL SE

(56) Entgegenhaltungen:
WO-A-82/02393
DE-B- 1 220 953
FR-A- 2 447 393
GB-A- 1 140 052
US-A- 2 522 538

(73) Patentinhaber: BASF Lacke + Farben
Aktiengesellschaft, Max-Winkelmann-Strasse 80,
D-4400 Münster(DE)

(72) Erfinder: Treutlein, Roland, Kaltenhäuser Weg 16,
D-8722 Bergrheinfeld(DE)
Erfinder: Müller, Bodo, Dr., Mergentheimer Strasse 8,
D-8700 Würzburg(DE)
Erfinder: Mayenfels, Peter, Dr., Derkskamp 2,
D-4400 Münster(DE)

ACTORUM AG

**Beschreibung**

Die Erfindung betrifft wasserverdünnbare Beschichtungszusammensetzungen, die Bindemittel, Aluminiumpigment und ein wäßriges Verdünnungsmittel enthalten.

Wasserverdünnbare Beschichtungszusammensetzungen, die Bindemittel, Aluminiumpigment und ein wäßriges Verdünnungsmittel enthalten, sind bekannt und sollen insbesondere in der Automobillackierung zur Herstellung von Metalleffektlackierungen eingesetzt werden.

Metalleffektlackierungen werden heute bevorzugt nach dem sogenannten "Basecoat-Clearcoat"-Verfahren aufgebracht, bei dem ein mit Aluminiumpigmenten pigmentierter Basislack vorlackiert und anschließend mit einem Klarlack überzogen wird.

Ein besonderes Problem wäßriger Beschichtungszusammensetzungen zur Herstellung von Metalleffektlackierungen liegt darin, daß sie oft einen pH-Wert aufweisen, der so hoch ist, daß die verwendeten Aluminiumpigmente unter Wasserstoffbildung mit Wasser reagieren. Dieses Phänomen zieht eine Reihe von Problemen nach sich, insbesondere bei Lagerung der Lackmaterialien in geschlossenen Behältern.

Es sind eine Reihe von Verfahren bekannt geworden, mit deren Hilfe Aluminiumpigmente so passiviert werden sollen, daß gar keine bzw. nur noch eine sehr geringfügige Wasserstoffentwicklung auftritt. Alle diese Verfahren weisen jedoch zum Teil erhebliche Nachteile auf. So führt z.B. die Verwendung von organischen Stabilisierungsmitteln aufgrund von Netzmitteleigenschaften zu Störungen im Lackfilm (Feuchtigkeitsempfindlichkeit, Haftungsstörungen...), und beim Einsatz von bekannten, durch Chromatierung passivierten Aluminiumpigmenten (vgl. z.B. GB-A 1 140 052) müssen Beeinträchtigungen im Farbton und Metalleffekt (Flop) der Metalleffektlackierungen in Kauf genommen werden.

Der vorliegenden Erfindung liegt die Aufgabe zugrunde, wasserverdünnbare Beschichtungszusammensetzungen der eingangs genannten Art bereitzustellen, die die oben dargestellten Nachteile des Standes der Technik nicht aufweisen.

Diese Aufgabe wird erfindungsgemäß durch wasserverdünnbare Beschichtungszusammensetzungen der eingangs genannten Art gelöst, die dadurch gekennzeichnet sind, daß sie als Aluminiumpigment ein Pigment, das enthalten, das erhalten worden ist, indem ein schmiermittelbelegtes Aluminiumpigment in einer wäßrigen Passivierungslösung, die Chromsäure und einen wasserlöslichen Glykolether der allgemeinen Formel $R^1-(-O-CHR^2-CH_2-)-nOH$ ($R^1$ steht für einen niederen Alkylrest, $R^2$ steht entweder für ein H-Atom oder einen niederen Alkylrest, vorzugsweise für eine $-CH_3$-Gruppe, n steht für eine Zahl von 1 bis 5) und/oder ein wasserlösliches Glykol der allgemeinen Formel $HO-(CHR^3-CH_2-O-)_nH$ ($R^3$ steht entweder für ein H-Atom oder für einen niederen Alkylrest, vorzugsweise für eine $-CH_3$-Gruppe, n steht für eine Zahl von 1 bis 5) enthält, bei mindestens 50°C, vorzugsweise 60 bis 90°C, besonders bevorzugt etwa 80°C, passiviert worden ist.

Die erfindungsgemäßen wasserverdünnbaren Beschichtungszusammensetzungen können im Prinzip alle für wasserverdünnbare Beschichtungszusammensetzungen geeigneten Bindemittel enthalten. Als Beispiele seien wasserverdünnbare Polyester-, Polyacrylat-, Polyurethan- oder Aminoplastharze genannt. Bevorzugt sind wasserverdünnbare Beschichtungszusammensetzungen, deren Bindemittel zumindest zum Teil aus einem wasserverdünnbaren Polyurethanharz bestehen.

Die erfindungsgemäßen wasserverdünnbaren Beschichtungszusammensetzungen enthalten Aluminiumpigmente, die erhalten worden sind, indem ein schmiermittelbelegtes Aluminiumpigment in einer wäßrigen Passivierungslösung, die Chromsäure und einen wasserlöslichen Glykolether der allgemeinen Formel $R^1(-O-CHR^2-CH_2)_nOH$ ($R^1$ steht für einen niederen Alkylrest, $R^2$ steht entweder für ein H-Atom oder einen niederen Alkylrest, vorzugsweise für eine $-CH_3$-Gruppe, n steht für eine Zahl von 1 bis 5) und/oder ein wasserlösliches Glykol der allgemeinen Formel $HO-(CHR^3-CH_2-O-)_nH$ ($R^3$ steht entweder für ein H-Atom oder für einen niederen Alkylrest, vorzugsweise für eine $-CH_3$-Gruppe, n steht für eine Zahl von 1 bis 5) enthält, bei mindestens 50°C, vorzugsweise 60 bis 90°C, besonders bevorzugt etwa 80°C, passiviert worden ist.

Überraschenderweise werden nur dann brauchbare Pigmente erhalten, wenn das zu passivierende Aluminiumpigment noch mit dem zur Herstellung des Pigments notwendigen Schmiermittel belegt ist. Um Pigmente mit den gewünschten Eigenschaften zu erhalten, müssen Pigmente eingesetzt werden, die einen bestimmten Mindestgehalt an Schmiermittel aufweisen. Der Schmiermittelgehalt wird vorzugsweise im Laufe des Herstellungsprozesses der Aluminiumpigmente eingestellt. Der erforderliche Mindestgehalt ist sowohl von der Natur des Schmiermittels als auch von der Art der eingesetzten Aluminiumpigmente abhängig und kann vom Durchschnittsfachmann mit Hilfe weniger orientierender Versuche schnell ermittelt werden.

Mit Fettaminen als Schmiermittel belegte Aluminiumpigmente führen zu passivierten Pigmenten, die ganz besonders vorteilhafte Eigenschaften haben. Unter Fettaminen werden Gemische langkettiger, vorwiegend primärer Alkylamine, die z.B. aus Fettsäuren über die zugehörigen Nitrile durch Reduktion gewonnen worden sind, verstanden.

Als schmiermittelbelegte Aluminiumpigmente können allgemein bekannte und gebräuchliche Aluminiumpigmente, die aus Aluminium oder Aluminiumlegierungen, vorzugsweise aus reinem Aluminium bestehen, eingesetzt werden. Es werden vorzugsweise blättchenförmige Aluminiumpigmente verwendet. Die Aluminiumpigmente können in Form der kommerziell erhältlichen Pasten ohne weitere Vorbehandlung eingesetzt werden.

Die Passivierung der schmiermittelbelegten Aluminiumpigmente wird bei mindestens 50°C, vorzugsweise 60 bis 90°C, besonders bevorzugt etwa 80°C, in einer wäßrigen Lösung durchgeführt, die Chromsäure und einen wasserlöslichen Glykolether der allgemeinen Formel

$$R^1(\text{-O-CHR}^2\text{-CH}_2\text{-})_n\text{OH}$$

($R^1$ steht für einen niederen Alkylrest, $R^2$ steht entweder für ein H-Atom oder einen niederen Alkyrest, vorzugsweise für eine -$CH_3$-Gruppe, n steht für eine Zahl von 1 bis 5) und/oder ein wasserlösliches Glykol der allgemeinen Formel $HO\text{-(-O-CHR}^3\text{-CH}_2\text{-O-})_n H$ ($R^3$ steht entweder für ein H-Atom oder für einen niederen Alkylrest, vorzugsweise für eine -$CH_3$-Gruppe, n steht für eine Zahl von 1 bis 5) enthält.

Die wäßrige Lösung kann außerdem noch weitere, den Chromatierungsprozeß positiv beeinflussende Zusätze, wie z.B. Fluoride oder Phosphate, enthalten.

Besonders gute Resultate werden erhalten, wenn die Passivierungslösung Chromsäure und n-Butylglykol ($CH_3\text{-(CH}_2)_3\text{-O-CH}_2\text{-CH}_2\text{-OH}$) enthält.

Sowohl die Chromsäure- als auch die Glykolether- bzw. Glykolkonzentration kann in weiten Grenzen variiert werden. Die erfindungsgemäße Passivierungslösung enthält in der Regel mindestens 1,5, vorzugsweise 1,5 bis 4,0, besonders bevorzugt 2,0 Gew.% Chromsäure und 3 bis 30, vorzugsweise 7 bis 15, besonders bevorzugt 10 Gew.% wasserlöslichen Glykolether und/oder wasserlösliches Glykol.

Die Passivierung wird vorzugsweise in der frisch angesetzten Passivierungslösung durchgeführt und ist in der Regel nach 10 bis 30 Minuten abgeschlossen.

Nach Beendigung der Passivierung wird das erhaltene passivierte Pigment von der Passivierungslösung abgetrennt und gründlich mit Wasser ausgewaschen. Das so erhaltene passivierte Aluminiumpigment kann dann nach allgemein bekannten Methoden in wasserverdünnbare Beschichtungszusammensetzungen inkorporiert werden.

Die erfindungsgemäßen wasserverdünnbaren Überzugszusammensetzungen enthalten ein wäßriges Verdünnungsmittel, worunter Wasser, das ggf. auch noch organische Lösungsmittel enthalten kann, zu verstehen ist.

Neben Bindemittel, Aluminiumpigment und wäßrigem Verdünnungsmittel können die erfindungsgemäßen Beschichtungszusammensetzungen noch weitere allgemein bekannte Zusätze, wie z.B. nichtmetallische Pigmente, Rheologiehilfsmittel und Verlaufshilfsmittel, enthalten.

Die erfindungsgemäßen wasserverdünnbaren Beschichtungszusammensetzungen werden vorzugsweise als Basisbeschichtungszusammensetzungen zur Herstellung von "Basecoat/Clearcoat"-Metalleffektlackierungen verwendet. Sie zeigen eine ausgezeichnete Stabilität gegenüber Wasserstoffentwicklung und liefern Metalleffektlackierungen, die in ihren optischen (Flop, Farbton usw.) und technologischen (Feuchtigkeitsunempfindlichkeit, Schwitzwasserresistenz, Zwischenhaftung ...) Eigenschaften mit Lackierungen vergleichbar sind, die unter Verwendung konventioneller (d.h. ausschließlich organische Lösungsmittel als Verdünnungsmittel enthaltenden) Basisbeschichtungszusammensetzungen hergestellt worden sind.

Die Anwendbarkeit der erfindungsgemäßen Beschichtungszusammensetzungen ist nicht auf die Automobillackierung be schränkt. Es können auch andere Substrate, die aus ggf. vorbehandeltem Metall, Holz, Kunststoff oder dergleichen bestehen, im Einschicht- oder Mehrschichtverfahren beschichtet werden.

Die Erfindung betrifft auch ein Verfahren zur Herstellung von Aluminiumpigmenten, die in wasserverdünnbaren Beschichtungszusammensetzungen eingesetzt werden können, das dadurch gekennzeichnet ist, daß ein schmiermittelbelegtes Aluminiumpigment in einer wäßrigen Passivierungslösung, die Chromsäure und einen wasserlöslichen Glykolether der allgemeinen Formel $R\underline{1}(\text{-O-CHR}^2\text{-CH}_2\text{-})_n\text{-OH}$ ($R^1$ steht für einen niederen Alkylrest, $R^2$ steht entweder für ein H-Atom oder einen niederen Alkylrest, vorzugsweise für eine -$CH_3$-Gruppe, n steht für eine Zahl von 1 bis 5) und/oder ein wasserlösliches Glykol der allgemeinen Formel $HO\text{-(CHR}^3\text{-CH}_2\text{-O-})_n H$ ($R^3$ steht entweder für ein H-Atom oder für einen niederen Alkylrest vorzugsweise für eine -$CH_3$-Gruppe, n steht für eine Zahl von 1 bis 5) enthält, bei mindestens 50°C, vorzugsweise 60 bis 90°C, besonders bevorzugt etwa 80°C passiviert wird.

Das erfindungsgemäße Verfahren wird ausgeführt, indem das zu passivierende Aluminiumpigment ohne weitere Vorbehandlung, d.h. insbesondere ohne Entfernung des im Pigmentherstellungsprozeß notwendigen Schmiermittels, in der Passivierungslösung bei mindestens 50°C, vorzugsweise 60 bis 90°C, besonders bevorzugt etwa 80°C passiviert wird.

Die Anwesenheit des Schmiermittels ist für eine erfolgreiche Durchführung des Verfahrens unentbehrlich.

Pigmente mit ganz besonders guten Eigenschaften werden erhalten, wenn Aluminiumpigmente eingesetzt werden, die unter Verwendung von Fettaminen als Schmiermittel hergestellt worden sind.

Weitere Details zu den Verfahrensbedingungen können obigem Text entnommen werden.

Die nach dem erfindungsgemäßen Verfahren hergestellten Aluminiumpigmente sind für einen Einsatz in wasserverdünnbaren Beschichtungszusammensetzungen hervorragend geeignet (vgl. obige Ausführungen).

Im folgenden wird die Erfindung anhand eines Ausführungsbeispiels näher erläutert.

Herstellung einer Passivierungslösung

2 Gewichtsteile $CrO_3$ werden in einem Edelstahl oder Kunststoffbehältnis vorgelegt und in 90 Gew.-Teilen heißem destillierten Wasser gelöst. Zu dieser heißen Chromsäurelösung werden 10 Gew.-Teile n-Butylglykol zugegeben und kurze Zeit gerührt (pH der Passivierungslösung ca. 0).

Passivierung des Aluminiumpigments

Das zu passivierende, blättchenförmige, unter Verwendung von Fettaminen als Schmiermittel hergestellte Aluminiumpigment wird in Pastenform (Feststoffgehalt etwa 65 Gew.-%, Anteil an aliphatischen bzw. aromatischen Lösungsmitteln etwa 35 Gew.-%) in einem Edelstahl-oder Kunststoffbehältnis vorgelegt und mit der 2 bis 2,5fachen Menge der oben beschriebenen Passivierungslösung versetzt. Der Ansatz wird bei 80°C gehalten und für etwa 15 bis 25 Minuten stark gerührt.

Dann läßt man das passivierte Aluminiumpigment absitzen, dekantiert die überstehende Lösung und spült das passivierte Pigment so oft mit Brauchwasser bis die überstehende Lösung keinen Gelbstich mehr aufweist.

Schließlich wird mit destilliertem Wasser so oft gespült bis der Elektrolytgehalt des Aluminiumpigments für den Einsatz in einer wäßrigen Basisbeschichtungszusammensetzung niedrig genug ist.

Das so passivierte Aluminiumpigment wird in die in den Ausführungsbeispielen der europäischen Patentanmeldung EP 89 497 beschriebenen wäßrigen Beschichtungszusammensetzungen inkorporiert. Es wurden lagerstabile Beschichtungszusammensetzungen erhalten, die wie im experimentellen Teil der europäischen Patentanmeldung EP 89 497 beschrieben zu Zweischicht-Metalleffektlackierungen verarbeitet wurden. Die erhaltenen Zweischicht-Metalleffektlackierungen zeigten ausgezeichnete optische und technologische Eigenschaften.

**Patentansprüche**

1. Wasserverdünnbare Beschichtungszusammensetzungen, die Bindemittel, ein durch Behandlung mit Chromsäure passiviertes Aluminiumpigment und ein wäßriges Verdünnungsmittel enthalten, dadurch gekennzeichnet, daß sie als Aluminiumpigment ein Pigment enthalten, das erhalten worden ist, indem ein mit Fettaminen belegtes Aluminiumpigment in einer wäßrigen Passivierungslösung, die mindestens 1,5, vorzugsweise 1,5 bis 4,0, besonders bevorzugt 2,0 Gew.-% Chromsäure und 3 bis 30, vorzugsweise 7 bis 15, besonders bevorzugt 10 Gew.-% eines wasserlöslichen Glykolethers der allgemeinen Formel R$^1$-(-O-CHR$^2$-CH$_2$-)$_n$-OH (R$^1$ steht für einen niederen Alkylrest, R$^2$ steht entweder für ein H-Atom oder einen niederen Alkylrest, vorzugsweise für eine -CH$_3$-Gruppe, n steht für eine Zahl von 1 bis 5) und/oder eines wasserlöslichen Glykols der allgemeinen Formel HO-(CHR$^3$-CH$_2$-O-)$_n$H (R$^3$ steht entweder für ein H-Atom oder für einen niederen Alkylrest, vorzugsweise für eine -CH$_3$-Gruppe, n steht für eine Zahl von 1 bis 5) enthält, bei mindestens 50°C, vorzugsweise 60 bis 90°C, besonders bevorzugt etwa 80°C passiviert worden ist.

2. Wasserverdünnbare Beschichtungszusammensetzungen nach Anspruch 1, dadurch gekennzeichnet, daß als wasserlöslicher Glykolether n-Butylglykol eingesetzt worden ist.

3. Verfahren zur Herstellung von durch Behandlung mit Chromsäure passivierten Aluminiumpigmenten, die in wasserverdünnbaren Beschichtungszusammensetzungen eingesetzt werden können, dadurch gekennzeichnet, daß ein mit Fettaminen belegtes Aluminiumpigment in einer wäßrigen Passivierungslösung, die mindestens 1,5, vorzugsweise 1,5 bis 4,0, besonders bevorzugt 2,0 Gew.-% Chromsäure und 3 bis 30, vorzugsweise 7 bis 15, besonders bevorzugt 10 Gew.-% eines wasserlöslichen Glykolethers der allgemeinen Formel R$^1$-O-CHR$^2$-CH$_2$-)$_n$-OH (R$^1$ steht für einen niederen Alkylrest, R$^2$ steht entweder für ein H-Atom oder einen niederen Alkylrest, vorzugsweise für eine CH$_3$-Gruppe, n steht für eine Zahl von 1 bis 5) und/oder eines wasserlöslichen Glykols der allgemeinen Formel HO-(CHR$^3$-CH$_2$-O-)$_n$H (R$^3$ steht entweder für ein H-Atom oder für einen niederen Alkylrest, vorzugsweise für eine -CH$_3$-Gruppe, n steht für eine Zahl von 1 bis 5) enthält, bei mindestens 50°C, vorzugsweise 60 bis 90°C, besonders bevorzugt etwa 80°C passiviert wird.

**Claims**

1. Water-dilutable coating composition which contains a binder, an aluminium pigment passivated by treatment with chromic acid, and an aqueous diluent, containing, as aluminium pigment, a pigment which has been obtained by passivating an aluminium pigment containing fatty amines in an aqueous passivating solution which contains at least 1.5, preferably 1.5 to 4.0, particularly preferably 2.0% by weight of chromic acid and 3 to 30, preferably 7 to 15, particularly preferably 10% by weight of a water-soluble glycol ether of the general formula R$^1$-(-O-CHR$^2$-CH$_2$-)$_n$-OH (R$^1$ represents a lower alkyl radical, R$^2$ represents either an H atom or a lower alkyl radical, preferably a -CH$_3$ group, and n represents a number from 1 to 5) and/or a water-soluble glycol of the general formula HO-(CHR$^3$-CH$_2$-O-)$_n$H (R$^3$ represents either an H atom or a lower alkyl radical, preferably a -CH$_3$ group, and n represents a number from 1 to 5), at not less than 50°C, preferably 60 to 90°C, particularly preferably about 80°C.

2. Water-dilutable coating composition according to Claim 1, characterized in that the water-soluble glycol ether employed is n-butyl glycol.

3. Process for the preparation of aluminium pigments passivated by treatment with chromic acid which can be employed in water-dilutable coating compositions, characterized in that an aluminium pigment containing fatty amines is passivated in an aqueous passivating solution which contains at least 1.5, preferably 1.5 to 4.0, particularly preferably 2.0% by weight of chromic acid and 3 to 30, preferably 7 to 15, particularly preferably 10% by weight of a water-soluble glycol ether of the general formula R$^1$-(-O-CHR$^2$-CH$_2$-)$_n$OH (R$^1$ represents a lower alkyl radical, R$^2$ represents either an H atom or a lower alkyl radical, preferably a -CH$_3$ group, and n represents a number from 1 to 5) and/or a water-soluble glycol of the general formula HO-(CHR$^3$-CH$_2$-

O-)$_n$H (R$^3$ represents either an H atom or a lower alkyl radical, preferably a -CH$_3$ group, and n represents a number from 1 to 5), at not less than 50°C, preferably 60 to 90°C, particularly preferably about 80°C.

**Revendications**

1. Compositions de revêtement diluables dans l'eau, qui contiennent des liants, un pigment d'aluminium passivé par traitement par l'acide chromique et un diluant aqueux, caractérisées par le fait qu'elles contiennent, comme pigment d'aluminium, un pigment qui a été obtenu par passivation à une température d'au moins 50°C, de préférence, de 60 à 90°C, de façon particulièrement préférée, à environ 80°C, d'un pigment d'aluminium enrobé d'amines grasses, dans une solution aqueuse de passivation qui contient au moins 1,5, de préférence, 1,5 à 4,0, de façon particulièrement préférée, 2,0% en poids d'acide chromique, et 3 à 30, de préférence, 7 à 15, de façon particulièrement préférée, 10% en poids d'un éther de glycol soluble dans l'eau, de formule générale:

R$^1$-(-OCHR$^2$-CH$_2$-)$_n$-O

– (R$^1$ représente un reste alkyle inférieur;
– R$^2$ représente, ou bien un atome d'hydrogène, ou bien un reste alkyle inférieur, de préférence, un groupe -CH$_3$,
– n représente un nombre allant de 1 à 5) et/ou un glycol soluble dans l'eau, de formule générale:

HO-(CHR$^3$-CH$_2$-O-)$_n$H

– (R$^3$ représente, ou bien un atome d'hydrogène, ou bien un reste alkyle inférieur, de préférence, un groupe -CH$_3$;
– n représente un nombre allant de 1 à 5).

2. Compositions de revêtement diluables dans l'eau selon la revendication 1, caractérisées par le fait que le n-butylglycol a été utilisé comme éther de glycol soluble dans l'eau.

3. Procédé de fabrication de pigments d'aluminium passivés par traitement par l'acide chromique, qui peuvent être utilisés dans des compositions de revêtement diluables dans l'eau, caractérisé par le fait qu'on effectue la passivation, à une température d'au moins 50°C, de préférence, de 60 à 90°C, de façon particulièrement préférée à environ 80°C, d'un pigment d'aluminium enrobé d'amines grasses, dans une solution aqueuse de passivation qui contient au moins 1,5, de préférence, 1,5 à 4, 0, de façon particulièrement préférée, 2,0% en poids d'acide chromique, et 3 à 30, de préférence, 7 à 15, de façon particulièrement préférée, 10% en poids d'un éther de glycol soluble dans l'eau, de formule générale:

R$^1$-(-OCHR$^2$-CH$_2$-)$_n$-OH

– (R$^1$ représente un reste alkyle inférieur;
– R$^2$ représente, ou bien un atome d'hydrogène, ou bien un reste alkyle inférieur, de façon préférée, un groupe -CH$_3$,
– n représente un nombre allant de 1 à 5) et/ou un glycol soluble dans l'eau, de formule générale:

HO-(CHR$^3$-CH$_2$-O-)$_n$H

– (R$^3$ représente, ou bien un atome d'hydrogène, ou bien un reste alkyle inférieur, de préférence, un groupe -CH$_3$;
– n représente un nombre allant de 1 à 5).